# EUROPÄISCHE PATENTSCHRIFT

(11) **EP 3 442 833 B1**
(45) Veröffentlichungstag und Bekanntmachung des Hinweises auf die Patenterteilung: **05.06.2019**
(21) Anmeldenummer: 17768755.5
(22) Anmeldetag: 14.09.2017
(51) Int. Cl.: B60R 16/037

(54) **KRAFTFAHRZEUG SOWIE VERFAHREN ZUR IDENTIFIKATION EINER EIN KRAFTFAHRZEUG ÖFFNENDEN PERSON**
MOTOR VEHICLE AND METHOD FOR IDENTIFYING A PERSON OPENING A MOTOR VEHICLE
VÉHICULE AUTOMOBILE ET PROCÉDÉ D'IDENTIFICATION D'UNE PERSONNE OUVRANT UN VÉHICULE AUTOMOBILE

(30) Priorität: 27.09.2016 DE 102016218579
(43) Veröffentlichungstag der Anmeldung: 20.02.2019
(73) Patentinhaber: Audi AG, 85045 Ingolstadt (DE)
(72) Erfinder: HARBACH, Marian, 85055 Ingolstadt (DE)
(86) Internationale Anmeldenummer: PCT/EP2017/073136
(87) Internationale Veröffentlichungsnummer: WO 2018/059953

(56) Entgegenhaltungen:
- WO-A1-97/08648
- DE-A1-102007 046 270
- DE-A1-102009 005 525
- DE-A1-102015 101 164
- US-A- 4 857 916
- US-A1- 2015 337 571

## Beschreibung

Die Erfindung betrifft ein Kraftfahrzeug, umfassend eine zu einem Fahrersitzplatz führende Tür, sowie wenigstens eine Steuerungseinrichtung zur Einstellung personenspezifischer Parameter an einstellbaren Fahrzeugkomponenten.

Moderne Kraftfahrzeuge verfügen über eine Reihe von Fahrzeugkomponenten, die von dem Fahrer persönlich und individuell eingestellt werden können. Dies sind beispielsweise eine bestimmte Sitzposition bei elektrisch verstellbaren Fahrersitz, bestimmte favorisierte Rundfunksender, bestimmte bevorzugte Point of Interests innerhalb einer Navigationsdatenbank oder ähnliches. Diese persönlichen Einstellungen können mitunter in persönlichen Profilen zusammengefasst werden, so dass, wenn unterschiedliche Fahrer das Kraftfahrzeug bewegen, jeder Fahrer sein persönliches Profil hat, das aktiviert werden kann, woraufhin die Steuerungseinrichtung die entsprechenden Fahrzeugkomponenten einstellt respektive über entsprechende weitere Steuergeräte deren Einstellung veranlasst.

Dabei besteht bereits jetzt die Möglichkeit, einen Fahrer bereits zu identifizieren, bevor er direkt mit dem Kraftfahrzeug interagiert, also auf dem Fahrersitz Platz genommen hat und sein individuelles Profil quasi manuell auswählt. Eine solche Identifikation einer sich dem Fahrzeug nähernden Person erfolgt beispielsweise anhand eines Fahrzeugschlüssels mit einem Transponder oder Ähnlichem. Die Steuerungseinrichtung erfasst anhand der Schlüsselidentifikation, dass sich eine ihr bekannte Person dem Fahrzeug nähert. Nutzt jedoch eine andere Person als die Person, der die Schlüsselidentifikation zugeordnet ist, den Fahrzeugschlüssel, so kommt es zu einer Fehlerkennung, selbst wenn dieser Person selber ein individuelles Profil zugeordnet ist.

Alternativ ist es bekannt, anhand eines von der Person mitgeführten Smartphones, das mit der Steuerungseinrichtung kommuniziert, die Identifikation vorzunehmen. Nähern sich jedoch mehrere dem Fahrzeug bekannte Personen, die individuelle, über eine Smartphoneerkennung identifizierbare Profile hinterlegt haben, so ist eine Individualisierung bezogen auf den Fahrer wiederum nicht möglich. In diesem Fall erhält der dann tatsächliche Fahrer die verschiedenen erkannten Profile an einer Anzeigeeinrichtung dargestellt und muss manuell sein persönliches Profil aktivieren.

Aus DE 10 2014 204 882 A1 ist ein Kraftfahrzeug mit einer Möglichkeit der biometrischen Personenidentifikation bekannt, wobei die Person die biometrische Eingabe selbst vornehmen muss, beispielsweise durch Abgabe eines Fingerabdrucks an einem biometrischen Scanner.

Aus US 2015/0337571 A1 ist ein Kraftfahrzeug mit einem türgriffseitig integrierten biometrischen Sensor bekannt, der eine Personenidentifikation ermöglicht. Als biometrisches Merkmal wird der Fingerabdruck erfasst, sobald der Türgriff berührt wird.

Schließlich ist aus US 2009/0284359 A1 ein Kraftfahrzeug bekannt, bei dem eine Personenidentifikation des Fahrers erfolgt, wenn dieser bereits auf dem Fahrzeugsitz Platz genommen hat.

Der Erfindung liegt damit das Problem zugrunde, ein verbessertes Kraftfahrzeug anzugeben, das eine Personenidentifikation ermöglicht, bevor der Fahrer das Fahrzeug betritt.

Zur Lösung dieses Problems ist bei einem Kraftfahrzeug der eingangs genannten Art wenigstens ein türseitig oder in einem türnahen Bereich an der Fahrzeugkarosserie angeordneter Sensor zum Erfassen wenigstens einer den Türöffnungsvorgang betreffenden Information während eines Türöffnungsvorgangs vorgesehen, wobei die Steuerungseinrichtung zur Identifikation einer Person auf Basis der Information ausgebildet ist.

Das erfindungsgemäße Kraftfahrzeug identifiziert die Person anhand der Art der Weise, wie die Person die Tür öffnet. Jede Person führt den Türöffnungsvorgang individuell durch. Mittels eines türseitig oder im türnahen Bereich angeordneten Sensors wird nun wenigstens eine Information während des Türöffnungsvorgangs erfasst, die den Türöffnungsvorgang betrifft respektive beschreibt. Diese erfasste Information ist, nachdem wie beschrieben jede Person die Tür in einer individuellen Art und Weise öffnet, eine personenindividuelle Information. Die Steuerungseinrichtung ist nun in der Lage, auf Basis dieser Information die Person zu identifizieren, die den mitunter noch laufenden Türöffnungsvorgang durchführt oder die die Tür geöffnet hat. Die Steuerungseinrichtung wertet hierzu die erfasste Information entsprechend aus und vergleicht sie gegebenenfalls mit einer spezifischen Person zugeordneten Vergleichsinformationen, um anhand dieses Vergleichs die Person zu identifizieren. Fahrzeugseitig kann also eine Art Informationspool, der im Lauf der Zeit angelernt respektive kontinuierlich erweitert wird, hinterlegt sein, wobei innerhalb dieses Informationspools verschiedenen Personen entsprechende Informationsgruppen zugeordnet sind, so dass durch einfachen Informationsvergleich die Identifikation erfolgen kann. Das System sollte lernfähig sein, das heißt, dass der Informationspool kontinuierlich erweitert wird, so dass die hierüber erfolgte Identifikation im Laufe der Zeit immer zuverlässiger wird. Sobald eine ausreichende Übereinstimmung erkannt wird, wird die entsprechende Person als identifiziert angesehen, woraufhin die Steuerungseinrichtung die erforderlichen personenindividuellen Einstellungen an den Fahrzeugkomponenten vornimmt. Schlägt die Erkennung fehl, beispielsweise weil eine noch nicht registrierte respektive über ein zugeordnetes Profil verfügende Person die Tür öffnet, so erfolgt zwangsläufig keine Identifikation und damit auch keine individuelle Komponenteneinstellung.

Gemäß einer ersten Erfindungsalternative kann der Sensor ein Beschleunigungssensor zum Erfassen einer Beschleunigung oder eines Beschleunigungsprofils der Tür während des Öffnungsvorgangs als Information sein.

Hier erfolgt also eine Personenindividualisierung über die Beschleunigung respektive Geschwindigkeit, mit der die Tür geöffnet wird. Eine große, kräftige Person öffnet üblicherweise die Tür deutlich schneller respektive beschleunigt die Tür zum Öffnen deutlich stärker als eine zierliche Person. Auch wird ein größerer Mann die Tür mit einer anderen Beschleunigung oder Geschwindigkeit öffnen, als ein kleinerer Mann, letztlich abhängig davon, unter welchem Winkel der Arm der Person zur Tür steht, also unter welchem Winkel am Türgriff gezogen wird etc. Innerhalb des Informationspools können eine Person in einer gewissen Bandbreite verschiedene Beschleunigungsinformationen oder Beschleunigungsprofilinformationen zugeordnet sein, so dass innerhalb eines gewissen Toleranzbereichs eine Vergleichsmöglichkeit und damit Identifikationsmöglichkeit besteht.

Über den Sensor kann entweder eine Ist-Beschleunigung, also ein konkreter maximaler Beschleunigungswert erfasst werden oder ein Beschleunigungsprofil, also der Verlauf der Beschleunigung ab Beginn des Öffnungsvorgangs erfasst werden.

Der Sensor selbst ist bevorzugt an der Tür im Bereich der von der Karosserie wegschwenkenden Türkante angeordnet. Diese aus der Karosserie herausgeschwenkte Türkante erfährt die stärkste Beschleunigung, nachdem sie am weitesten von der karosserieseitigen Schwenkachse entfernt ist. Der Beschleunigungssensor kann unmittelbar an der Türkante oder im Bereich der Türkante verbaut sein.

Alternativ oder gegebenenfalls auch zusätzlich kann der Sensor im Bereich eines die Tür an der Fahrzeugkarosserie lagernden Scharniers angeordnet sein. Auch hier kann ein Beschleunigungswert oder ein Beschleunigungsprofil abgegriffen werden.

Alternativ oder zusätzlich kann auch ein Sensor, der an einem Türgriff angeordnet ist und als Drucksensor ausgelegt ist, und mittels dem ein auf dem Türgriff zum Öffnen der Tür lastender Druck erfassbar ist, verwendet werden. Hier wird erfasst, wie kräftig die Person, die die Tür öffnet, am Türgriff angreift respektive an dieser zieht. Auch dies ist wiederum personenindividuell, da natürlich eine kräftigere Person deutlich stärker auf den Türgriff drückt als eine weniger kräftige Person. Wiederum sind seitens der Steuerungseinrichtung entsprechende Vergleichswerte abgelegt, die in den entsprechenden, personenindividuellen Druckprofilen zusammengefasst sind. Die Steuerungseinrichtung kann wiederum einem gewissen Toleranzbereichs entsprechende Vergleiche vornehmen, um die Person zu individualisieren. Auch hier gilt, dass selbstverständlich mit jedem neuen Türöffnungsvorgang das Vergleichswerteprofil erweitert wird, um die über die Druckerfassung erfolgende Personenidentifikation im Laufe der Zeit immer sicherer zu machen.

Neben dem Kraftfahrzeug selbst betrifft die Erfindung ferner ein Verfahren zu Identifikation einer ein Kraftfahrzeug öffnenden Person, wobei das Kraftfahrzeug eine zu einem Fahrersitz führende Tür sowie eine Steuerungseinrichtung zur Einstellung personenspezifischer Parameter an einstellbaren Fahrzeugkomponenten aufweist. Das Verfahren zeichnet sich erfindungsgemäß dadurch aus, dass mittels wenigstens eines türseitig oder in einem türnahen Bereich an der Fahrzeugkarosserie angeordneten Sensors wenigstens eine den Türöffnungsvorgang betreffende Information während des Türöffnungsvorgangs erfasst wird und seitens der Steuerungseinrichtung die die Tür öffnende Person auf Basis der Information identifiziert wird.

Als Sensor kann ein Beschleunigungssensor verwendet werden und eine Beschleunigung oder ein Beschleunigungsprofil der Tür während des Öffnungsvorgangs als Information erfasst werden. Zusätzlich oder alternativ kann als Sensor ein an einem Türgriff angeordneter Drucksensor verwendet und der auf dem Türgriff zum Öffnen der Tür lastende Druck als Information erfasst werden.

Weitere Vorteile und Einzelheiten der Erfindung ergeben sich aus den im Folgenden beschriebenen Ausführungsbeispiel sowie anhand der Zeichnungen. Dabei zeigen:
- Fig. 1: eine Prinzipskizze eines erfindungsgemäßen Kraftfahrzeugs, und
- Fig. 2: eine Teilansicht der Fahrertür aus Fig. 1.

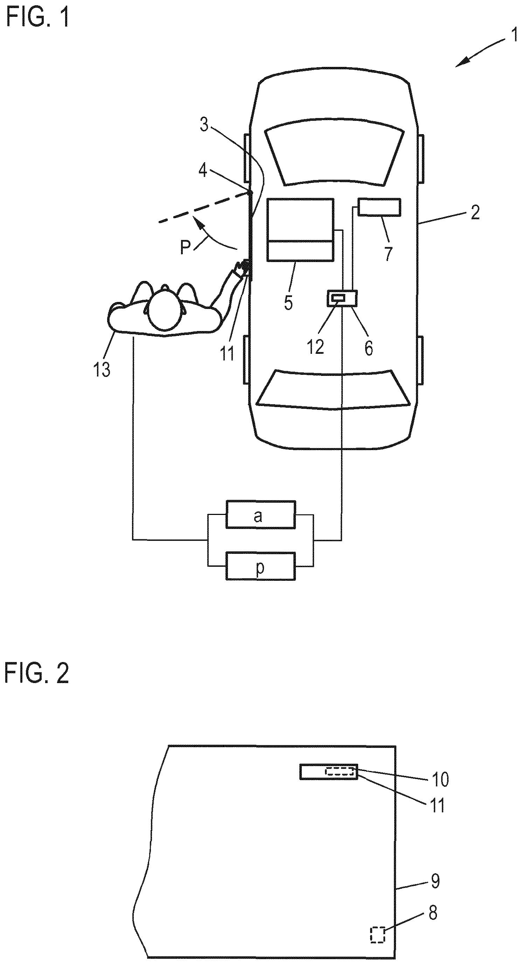

Fig. 1 zeigt ein erfindungsgemäßes Kraftfahrzeug 1 in Form einer Prinzipskizze. Das Fahrzeug 1 umfasst eine Fahrzeugkarosserie 2 sowie eine Tür 3, die fahrerseitig an einer Scharnierverbindung 4 an der Fahrzeugkarosserie 2 angelenkt ist und den Zutritt zu einem Fahrersitz 5 ermöglicht.

Vorgesehen ist des Weiteren eine Steuerungseinrichtung 6, über die diverse Fahrzeugkomponenten personenindividuell einstellbar ist, mithin also personenspezifische Parameter daran eingestellt werden können. Eine solche Fahrzeugkomponente kann beispielsweise der Fahrersitz 5 sein, der eine entsprechende Anzahl an elektromechanischen Aktoren aufweist, über die der Sitz verstellt werden kann, beispielsweise in der Sitzposition bezogen auf die Fahrzeuglängsachse, in der Lehnenneigung, in der Sitzhöhe etc.

Eine solche Fahrzeugkomponente kann auch ein Infotainment- und Anzeigesystem 7 sein, an dem beispielsweise personenspezifische Rundfunksender eingestellt werden können oder bestimmte personenspezifische Navigationsparameter respektive -ziele eingestellt werden können und Ähnliches. Auch das Fahrwerk betreffende personenspezifische Einstellungen, z. B. hinsichtlich der Dämpferhärte oder dergleichen sind denkbar.

Um diese personenindividuellen Einstellungen bereits dann vorzunehmen, bevor die Person das Kraftfahrzeug 1 betreten hat respektive auf dem Fahrersitz Platz genommen hat, ist eine Identifikation der Person erforderlich. Diese kann seitens der Steuerungseinrichtung 6 durchgeführt werden.

Hierzu wird wenigstens eine den Öffnungsvorgang der Tür 3 betreffende Information während eines Türöffnungsvorgangs mittels eines Sensors erfasst. Einer solcher Sensor kann beispielsweise ein Sensor 8 zur Erfassung einer Beschleunigung oder eines Beschleunigungsprofils der Tür 3 während des Öffnungsvorgangs sein. Dieser Sensor 8 ist bevorzugt benachbart zu der Türkante 9, die am weitesten von dem Scharnier 4 entfernt ist, angeordnet, die beim Türöffnen diese Türkante 9 die größte Beschleunigung erfährt.

Zusätzlich oder alternativ kann ein Sensor 10 an dem Türgriff 11 vorgesehen sein und als Drucksensor ausgeführt sein. Über diesen Sensor 10 wird erfasst, wie kräftig die Person am Türgriff 11 angreift, diesen drückt respektive an diesem zieht. Sowohl die Beschleunigung als auch der Druck ist personenindividuell. Die Steuerungseinrichtung 6 ist nun in der Lage, anhand von in einer Speichereinrichtung 12 abgelegten Vergleichswerten oder Vergleichsprofilen, die personenspezifisch oder personenindividuell gruppiert und zusammengefasst sind, die Person zu identifizieren, die gerade die Tür öffnet oder geöffnet hat. In Fig. 1 ist exemplarisch der Türöffnungsvorgang gezeigt. Eine Person 13 greift am Türgriff 10 an und schwenkt, wie durch den Pfeil P dargestellt ist, die Tür zur Seite hin auf. Während dieses Türöffnungsvorgangs, der mit dem kräftigen Angreifen am Türgriff 11 beginnt, wird wie beschrieben wenigstens eine diesen Türöffnungsvorgang beschreibende Information erfasst.

Es sei angenommen, dass in der Tür 3 der Sensor 8, also der Beschleunigungssensor, verbaut ist. Während des Türöffnungsvorgangs wird sodann als Information eine Beschleunigung oder ein Beschleunigungsprofil, das in Fig. 1 allgemein mit "a" beschrieben oder dargestellt ist, erfasst. Dieser Beschleunigungswert oder dieses Beschleunigungsprofil wird der Steuerungseinrichtung 6 gegeben, die daraufhin den erfassten Wert oder das Profil mit einem Vergleichswert oder einem Vergleichsprofil aus der Speichereinrichtung 12 vergleicht. Findet sich ein entsprechender Vergleichswert, so kann, natürlich innerhalb gewisser Toleranzen, eine Identifikation der Person erfolgen und daraufhin die entsprechenden personenspezifischen Einstellungen an den Fahrzeugkomponenten vorgenommen werden.

Ist alternativ der Sensor 10 im Türgriff 11 verbaut, so wird ein Druckwert oder ein Druckprofil, der bzw. das in Fig. 1 mit "p" dargestellt ist, erfasst, wobei der Druck bereits beim Angreifen gemessen werden kann, aber auch während des laufenden Öffnungsvorgangs. Das heißt, dass auch hier ein Druckprofil, das über den Öffnungsvorgang aufgezeichnet wird, erfasst werden kann. Dieser Druckwert oder das Druckprofil "p" wird der Steuerungseinrichtung 6 gegeben, die daraufhin mit entsprechenden Vergleichswerten aus dem Speicher 12 die Personenidentifikation vornimmt.

Selbstverständlich besteht die Möglichkeit, sowohl den Sensor 8 als auch den Sensor 10 zu verbauen, das heißt, dass in diesem Fall sowohl die beschleunigungsspezifischen Informationen "a" als auch die druckspezifischen Informationen "p" erfasst wird und gemeinsam der Steuerungseinrichtung 6 gegeben werden. Hierüber kann, nachdem zwei unterschiedliche Parameter aufgenommen werden, eine noch genauere Identifikation erfolgen.

## Patentansprüche

1. Kraftfahrzeug, umfassend eine zu einem Fahrersitzplatz führende Tür, sowie wenigstens eine Steuerungseinrichtung zur Einstellung personenspezifischer Parameter an einstellbaren Fahrzeugkomponenten, wobei wenigstens ein türseitig oder in einem türnahen Bereich an der Fahrzeugkarosserie angeordneter Sensor (8, 10) zum Erfassen wenigstens einer den Türöffnungsvorgang betreffenden Information (a, p) während eines Türöffnungsvorgangs vorgesehen ist, wobei die Steuerungseinrichtung (6) zur Identifikation der die Tür öffnenden Person (13) auf Basis der Information sowie zur Einstellung der Fahrzeugkomponenten in Abhängigkeit der Personenidentifikation ausgebildet ist.

2. Kraftfahrzeug nach Anspruch1,
**dadurch gekennzeichnet,**
**dass** der Sensor (8) ein Beschleunigungssensor zum Erfassen einer Beschleunigung oder eines Beschleunigungsprofil der Tür (3) während des Öffnungsvorgangs als Information (a) ist.

3. Kraftfahrzeug nach Anspruch 2,
**dadurch gekennzeichnet,**
**dass** der Sensor (8) an der Tür (3) im Bereich der von der Karosserie (2) wegschwenkenden Türkante (9) angeordnet ist.

4. Kraftfahrzeug nach Anspruch 2,
**dadurch gekennzeichnet,**
**dass** der Sensor (8) im Bereich eines die Tür (3) an der Fahrzeugkarosserie (2) lagernden Scharniers (4) angeordnet ist.

5. Kraftfahrzeug nach einem der vorangehenden Ansprüche,
**dadurch gekennzeichnet,**
**dass** der Sensor (10) ein an einem Türgriff (11) angeordneter Drucksensor zum Erfassen des auf dem Türgriff (11) zum Öffnen der Tür (3) lastenden Drucks als Information (p) ist.

6. Verfahren zur Identifikation einer ein Kraftfahrzeug öffnenden Person, wobei das Kraftahrzeug eine zu einem Fahrersitz führende Tür sowie eine Steuerungseinrichtung zur Einstellung personenspezifischer Parameter an einstellbaren Fahrzeugkomponenten aufweist, wobei mittels wenigstens eines türseitig oder in einem türnahen Bereich an der Fahrzeugkarosserie (2) angeordneten Sensors (8, 10) zum Erfassen wenigstens einer den Türöffnungsvorgang betreffenden Information (a, p) während eines Türöffnungsvorgangs erfasst wird und seitens der Steuerungseinrichtung (6) die die Tür (3) öffnende Person (13) auf Basis der Information identifiziert wird und die Fahrzeugkomponenten in Abhängigkeit der Personenidentifikation eingestellt werden.

7. Verfahren nach Anspruch 6,
**dadurch gekennzeichnet,**
**dass** als Sensor (8) ein Beschleunigungssensor verwendet wird und eine Beschleunigung oder ein Beschleunigungsprofil der Tür (3) während des Öffnungsvorgangs als Information (a) erfasst wird.

8. Verfahren nach Anspruch 6 oder 7,
**dadurch gekennzeichnet,**
**dass** als Sensor (10) ein an einem Türgriff (11) angeordneter Drucksensor verwendet und der auf dem Türgriff (11) zum Öffnen der Tür (3) lastende Druck als Information (p) erfasst wird.

## Claims

1. Motor vehicle, comprising a door leading to a driver seat, and at least one control device for setting person-specific parameters for settable vehicle components, wherein at least one sensor (8, 10) arranged on the door side or in a region on the vehicle body close to the door is provided for determining at least one item of information (a, p) concerning the door opening operation during a door opening operation, wherein the control device (6) is designed for determining the person (13) opening the door based on the information and for setting the vehicle components depending on the person identification.

2. Motor vehicle according to claim 1,
**characterised in that**
the sensor (8) is an acceleration sensor for determining as an item of information (a) an acceleration or an acceleration profile of the door (3) during the opening operation.

3. Motor vehicle according to claim 2,
**characterised in that**
the sensor (8) is arranged on the door (3) in the region of the door edge (9) pivoting away from the body (2).

4. Motor vehicle according to claim 2,
**characterised in that**
the sensor (8) is arranged in the region of a hinge (4) mounting the door (3) on the vehicle body (2).

5. Motor vehicle according to any one of the preceding claims,
**characterised in that**
the sensor (10) is a pressure sensor arranged on a door handle (11) for determining as an item of information (p) the pressure loaded on the door handle (11) to open the door (3).

6. Method for identifying a person opening a motor vehicle, wherein the motor vehicle has a door leading to a driver seat and a control device for setting person-specific parameters on settable vehicle components, wherein it is determined by means of at least one sensor (8, 10) arranged on the door side or in a region on the vehicle body (2) close to the door for determining at least one item of information (a, p) concerning the door opening operation during a door opening operation and the person (13) opening the door (3) is identified by the control device (6) based on the item of information and the vehicle components are set depending on the person identification.

7. Method according to claim 6,
**characterised in that**
an acceleration sensor is used as the sensor (8) and an acceleration or an acceleration profile of the door (3) is determined as the item of information (a) during the opening operation.

8. Method according to claim 6 or 7,
**characterised in that**
a pressure sensor arranged on a door handle (11) is used as the sensor (10) and the pressure loaded on the door handle (11) for opening the door (3) is determined as the item of information (p).

## Revendications

1. Véhicule automobile, comprenant une porte menant à un siège de conducteur, ainsi qu'au moins un dispositif de commande pour le réglage de paramètres spécifiques à une personne au niveau de composants de véhicule réglables, dans lequel au moins un capteur (8, 10) agencé côté porte ou dans une zone proche de la porte au niveau de la carrosserie de véhicule est prévu pour la détection d'au moins une information (a, p) concernant l'opération d'ouverture de porte pendant une opération d'ouverture de porte, dans lequel le dispositif de commande (6) est réalisé pour l'identification de la personne (13) ouvrant la porte sur la base de l'information ainsi que pour le réglage des composants de véhicule en fonction de l'identification de personne.

2. Véhicule automobile selon la revendication 1,
**caractérisé en ce**
**que** le capteur (8) est un capteur d'accélération pour la détection d'une accélération ou d'un profil d'accélération de la porte (3) pendant l'opération d'ouverture en tant qu'information (a).

3. Véhicule automobile selon la revendication 2,
**caractérisé en ce**
**que** le capteur (8) est agencé au niveau de la porte (3) dans la zone de l'arête de porte (9) pivotant à l'opposé de la carrosserie (2).

4. Véhicule automobile selon la revendication 2,
**caractérisé en ce**
**que** le capteur (8) est agencé dans la zone d'une charnière (4) logeant la porte (3) au niveau de la carrosserie de véhicule (2).

5. Véhicule automobile selon l'une quelconque des revendications précédentes,
**caractérisé en ce**
**que** le capteur (10) est un capteur de pression agencé au niveau d'une poignée (11) pour la détection de la pression pesant sur la poignée (11) pour l'ouverture de la porte (3) en tant qu'information (p).

6. Procédé d'identification d'une personne ouvrant un véhicule automobile, dans lequel le véhicule automobile présente une porte menant à un siège de conducteur ainsi qu'un dispositif de commande pour le réglage de paramètres spécifiques à une personne au niveau de composants de véhicule réglables, dans lequel il est détecté au moyen d'au moins un capteur (8, 10) agencé côté porte ou dans une zone proche de la porte au niveau de la carrosserie de véhicule (2) pour la détection d'au moins une information (a, p) concernant l'opération d'ouverture de porte pendant une opération d'ouverture de porte et la personne (13) ouvrant la porte (3) est identifiée par le dispositif de commande (6) sur la base de l'information et les composants de véhicule sont réglés en fonction de l'identification de personne.

7. Procédé selon la revendication 6,
**caractérisé en ce**
**qu'**un capteur d'accélération est utilisé en tant que capteur (8) et une accélération ou un profil d'accélération de la porte (3) est détecté(e) pendant l'opération d'ouverture en tant qu'information (a).

8. Procédé selon la revendication 6 ou 7,
**caractérisé en ce**
**qu'**un capteur de pression agencé au niveau d'une poignée (11) est utilisé en tant que capteur (10) et la pression pesant sur la poignée (11) pour l'ouverture de la porte (3) est détectée en tant qu'information (p).
